# EUROPEAN PATENT SPECIFICATION

(11) **EP 0 717 425 B1**
(45) Date of publication and mention of the grant of the patent: **17.03.1999**
(21) Application number: 95203385.0
(22) Date of filing: 07.12.1995
(51) Int. Cl.: H01H 71/02, H01H 9/02

(54) **A differential protection module with a multipole switch block with a safety coupling for coupling to the multipole switch block**
Differenzielles Schutzmodul mit multipolarem Schaltblock mit Sicherheitskupplung zur Ankupplung an den multipolaren Schaltblock
Module de protection différentielle avec un bloc interrupteur multipolaire avec accouplement de sécurité pour le couplage à ce bloc interrupteur multipolaire

(30) Priority: 13.12.1994 IT MI942507
(43) Date of publication of application: 19.06.1996
(73) Proprietor: BTICINO S.p.A., 20154 Milano (IT)
(72) Inventor: Fabrizi, Fabrizio, I-24100 Bergamo (IT); Pianezzola, Sergio, I-21100 Calcinate Del Pesce - Varese (IT)
(74) Representative: Maggioni, Claudio

(56) References cited:
- EP-A- 0 253 120
- EP-A- 0 375 568
- EP-A- 0 626 711
- EP-A- 0 626 712
- DE-U- 8 708 744

## Description

The present invention relates to an apparatus comprising a differential protection module with a multipole switch block with safety coupling for coupling the differential protection module to the multipole switch block, according to the preamble of claim 1, as known from EP-A-0 626 711. Both the protection module and the switch block are the so-called DIN type since they are intended to be fitted side by side on a support rail conforming to the DIN standard.

As is known, a differential protection module is an electrical device which has a transformer with two primary windings (in the case of single-phase distribution systems), or three/four primary windings (in the case of three-phase distribution systems) and one secondary winding for activating an electromagnet for releasing a manual setting device, the protection module being connectible mechanically to a modular switch block in order to open the switch in the event of the operation of the differential protection.

Although switches should be considered essential components of an electrical device with differential protection, differential protection devices and switches are produced as separate modular units which are assembled by the installers of electrical systems, in accordance with and conforming to safety standards.

This is dictated by the need to match, according to the system, the sensitivity and hysteresis characteristics of the differential actuator, which may vary according to the application, with the capacity and intervention-time characteristics of the switches (generally maximum-current thermal protection switches) which are also variable.

In order to satisfy all the possible requirements of use with a limited range of products, it is therefore necessary to produce the components as separate modules or blocks and to delegate to the installer, or to technically competent distribution points, the task of assembling the modules in dependence on specific requirements.

The assembly must conform to precise safety standards which, amongst other things, provide for the following requirements:
- assembly must be irreversible and any attempted disassembly must leave permanent traces and irreversible damage (assembly means not only the mechanical coupling between the two modules but also the necessary electrical connection);
- the mechanical coupling means used must be connected to one of the modules in a manner such as to prevent their loss and attempts to replace them with other unsuitable means;
- the suitably insulated terminals for interconnecting the differential module and the switches must be integral with the differential module and should preferably be protected.

These requirements are satisfied by a safety coupling device described in EP-A-0 626 711 in which a single element, connected to the differential module performs jointly the functions of an irreversible mechanical coupling element between the differential module and the switch module, of protecting the terminals, and of preventing any attempted electrical disconnection.

However, this safety device which is designed for coupling a differential module to a switch block which is necessarily multipolar is not completely satisfactory.

In fact, in order to benefit from the advantages offered by economy of scale, the multipole switch block is generally produced, during the final step of the production process, as a set or pack of several single-pole switch modules fixed together and interconnected mechanically in a manner such that the operation even of a single switch causes the operation of all of the others.

Single-pole switch modules, like multipole switch modules, are available on the market, so that the user, through inexperience, carelessness, etc., may be led to the error of fitting and associating differential module switch blocks with numbers of poles less than the number required to ensure the effectiveness of the differential protection, or even sets of switch modules which are not mechanically interconnected and therefore not functional, instead of the switch block required.

For example, an installer could be led to associate one single-pole switch module or a pair of single-pole modules which are not mechanically connected, with a two-pole differential protection module.

In the case of a three-pole differential protection module, the installer could mistakenly associate therewith three separate single-pole modules or one single-pole switch module together with a two-pole switch block.

Finally, in the case of a four-pole differential protection module (that is, a three-pole module with a neutral connection) various combinations of single-pole, two-pole and three-pole modules could be associated therewith.

It is therefore desirable to make it impossible, during installation, for modules or switch blocks which are unsuitable for the purpose to be incorrectly installed, and to permit each of the different types of protection module to be coupled exclusively to switch blocks specifically provided for each type of differential protection module.

In order to satisfy these requirements economically without onerous diversification of production, the use of means already present in the modules for other purposes as coupling keys and for preventing errors has been considered.

In particular, switch modules are provided which have sockets which open in one face of the module near a connection terminal.

The face may be defined as an upper or lower face with reference to the normal installation conditions.

A movable slide disposed in the socket has coupling teeth for fitting the module on a rail and a head which projects on the upper or lower face of the module.

In making up multipole switch blocks from single-pole modules, it is necessary for only some, but not all, of the modules to have coupling slides.

Thus, in the case of a two-pole block, it suffices for a single module to have a slide.

In the case of three-pole or four-pole blocks, it suffices for only the two outer modules to have coupling slides.

The presence of coupling slides which project from the face of the block, and of empty sockets opening in the same face in which there are terminals for connection with the differential protection module may therefore itself operate as a combination or key for permitting coupling with a predetermined type of differential module having a protective cover for the electrical connections between the block and the module with recesses and teeth corresponding to the slides and the empty sockets.

Unfortunately, a coupling key thus designed ensures only partially against installation errors.

In particular, it cannot prevent a three-pole differential module from being incorrectly coupled to a combination of a two-pole switch block and a single-pole switch block.

Moreover, it cannot prevent the connection of differential protection modules to switch blocks with different and incompatible electrical characteristics.

A further limitation of the safety coupling device described in the European patent application is that this device prevents access to the slides coupling the switch block to the rail once the switch-differential protection unit is installed, and thus prevents its removal.

These limitations are avoided by a differential protection module in combination with a multipole switch block with safety coupling for coupling the module to the modular switch block which has projecting pins, preferably two pins, on the face of the differential module which is to be placed beside the switch block, the positions of the pins on the face depending both upon the electrical characteristics of the differential module and upon the number of poles of the module, so as to constitute a key for coupling with one, and only one, type of switch block which has seats in positions corresponding to those of the pins of the differential module, the seats being formed by milling, during the preparation of the switch block, on its face which is to be placed beside the differential module.

The pins and the corresponding seats thus together perform the dual coupling-key function according to the electrical characteristics and the number of poles.

The differential protection module also comprises a protective and irreversible coupling cover articulated to the differential module in a captive manner and having teeth of various types which snap-engage irreversibly:
A) in seats in the switch block to form plates for preventing access to clamping screws of terminals,
B) in switch-block sockets which do not have coupling slides 3;
C) in slide-operating holes present in the heads of the slides housed in the respective sockets.

All of these snap teeth cooperate to ensure irreversible coupling of the cover with the switch block, the coupling being distributed at several points on the periphery of the cover, rendering it virtually impossible to remove.

The snap teeth of the third type are advantageously disposed at the ends of resilient arms formed in the cover and having a coupling stirrup or tooth accessible from outside the cover to allow the coupling slides to be acted on by a releasing force from outside.

This enables the unit to be removed from the installation rail.

The characteristics and advantages of the invention will become clearer from the following description of a preferred embodiment and from the appended drawings, in which:
Figure 1 is an exploded, perspective view of a multipole switch block, formed by a plurality of single-pole modules, for coupling to a differential protection module of the invention,
Figure 2 is an exploded, perspective view of a differential protection module with safety coupling for coupling to a switch block, according to the present invention,
Figure 3 is a perspective view of a detail of the module of Figure 2 with its safety coupling cover according to the invention, on an enlarged scale,
Figure 4 is a section taken on the line I-I of Figure 2 of a slide socket in a switch block and of its interaction with a coupling slide or with a first type of coupling tooth of the safety coupling cover of Figure 3,
Figure 5 is a section taken on the line II-II of Figure 3 of a portion of the switch block and of the safety coupling cover of Figure 3 showing the interaction of a coupling slide with a second type of coupling tooth of the cover,
Figure 6 is a side view of the cover of Figure 5 interacting with a tool to allow the slide to be released from the fitting rail and the electrical device to be removed from the rail.

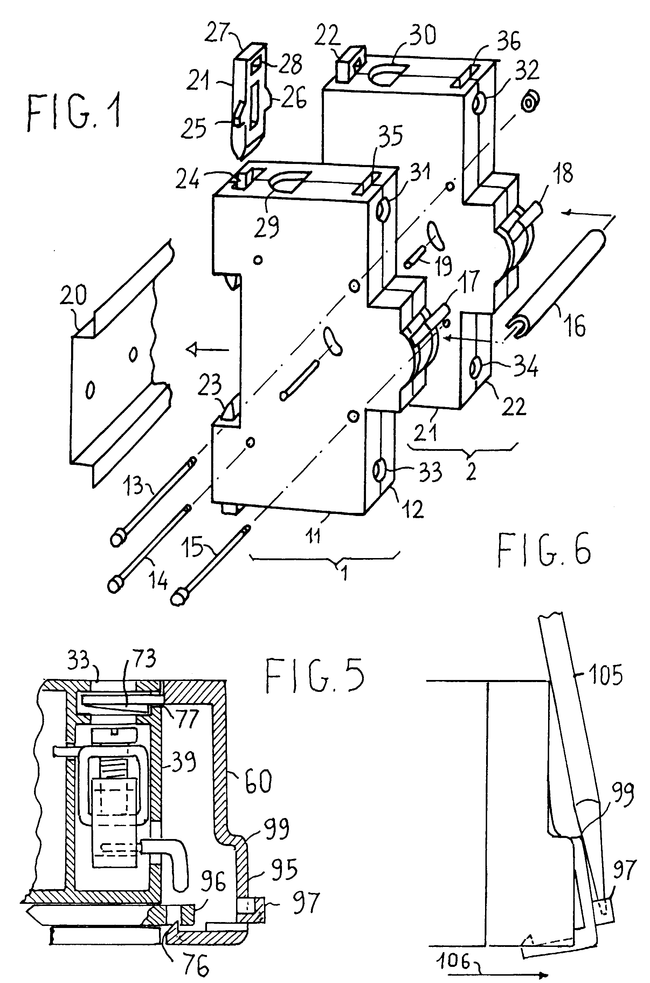

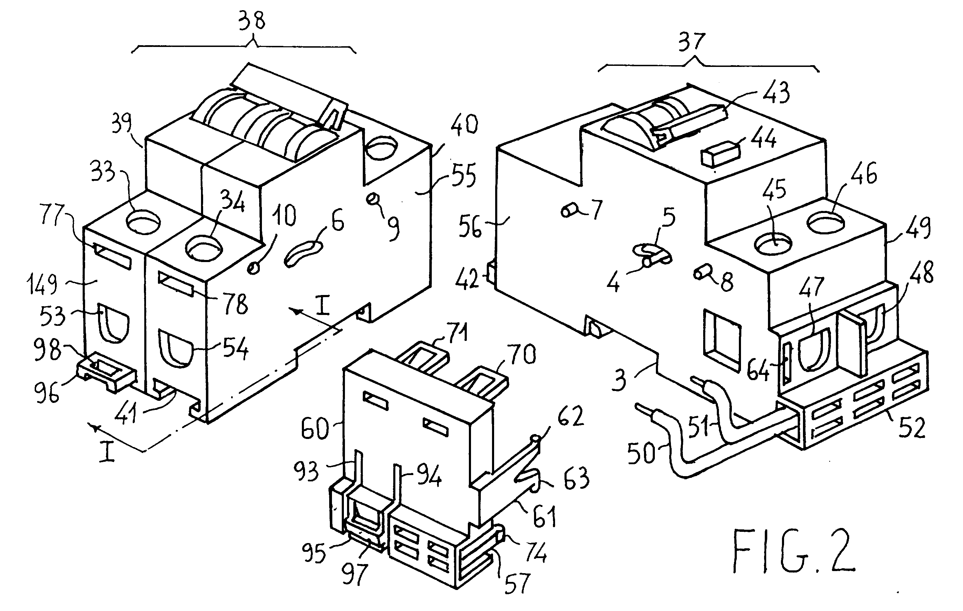

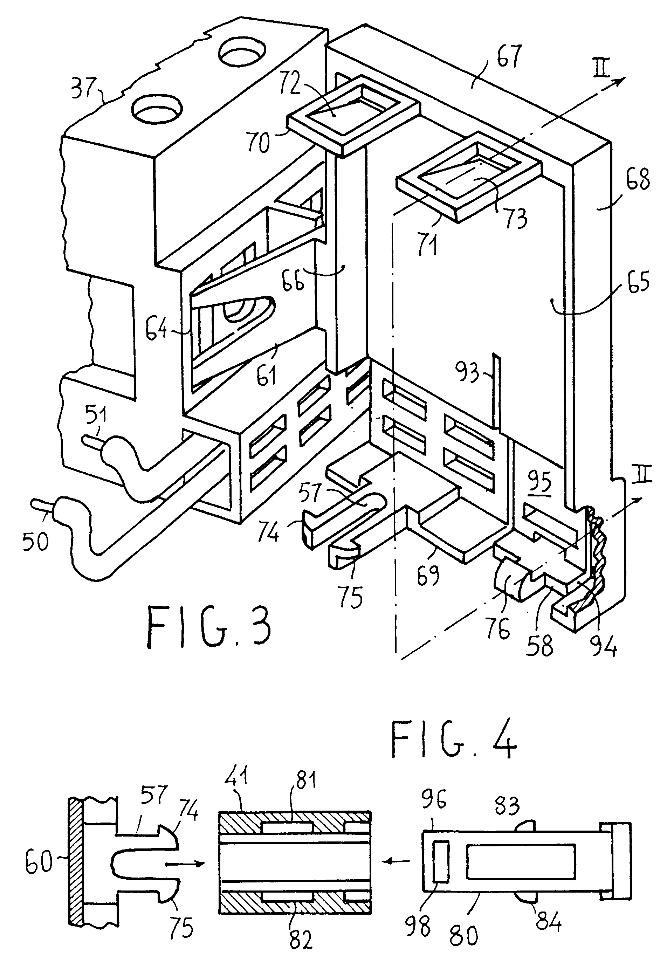

With reference to Figures 1 and 2, it is appropriate, for clarity of description, to define some commonly-used conventions of expression which will be used below.

A DIN-type modular electrical device is constituted by a generic, flattened, rectangular, parallelepipedal body with a rear face for coupling with an installation rail by means of suitable coupling teeth, a front face opposite the rear face, two side faces with larger surfaces, a lower face and an upper face.

These modules are constructed for fitting on rails with their side faces disposed side by side in contact with one another.

In electrical systems, more than two modular devices are generally juxtaposed and a device may in turn be formed as a unitary block composed of several modules.

For example, Figure 1 is an exploded, perspective view showing a two-pole switch block formed by the juxtaposition of two single-pole modules 1 and 2.

Each of the two switches comprises a housing constituted by two half-shells of insulating material, 11, 12 and 21, 22, respectively, which are coupled by screws or rivets in a plane parallel to the side faces of the switches.

Multipole switch blocks with the desired number of poles, which is 2 in the example of Figure 1, can be formed, during the final stage of the production process, with the use of screws or rivets such as 13, 14, 15, of suitable length.

Each switch contains a thermomagnetically activated device for mechanical setting and automatic opening of the contact.

The setting and automatic opening devices of the various switches of a multipole block are coupled mechanically so as to operate together, by means of a bar 16 with a C-shaped cross-section which is superimposed on the manual setting and release levers 17, 18 of the various switches, and by means of pins, such as the pin 19 which extend through suitable holes in the housings, directly coupling the kinematic mechanisms for automatically opening the various switches.

Each switch such as 1 or 2, if it is produced as a single-pole module, has a pair of opposed coupling slides, such as 21, 22, which are housed slidingly in sockets (such as 24) in the housing which open into a recess in the rear face of the switch and in the upper and lower faces, respectively.

The coupling slides have teeth such as 25, 26, which are engaged in the socket of the housing, ensuring that the slides are captive whilst allowing a predetermined travel of the slide in its seat.

Resilient means, not shown, preferably integral with the slides, bias them towards a coupling position and enable the switches to be coupled firmly on a rail 20.

To allow the switches to be removed from the rail, the slides have heads 27 which project from the upper or lower face of the housing.

An eye or recess 28 in the head 27 enables a removal force to be exerted on the slide by a common tool such as a screwdriver, the force opposing the action of the resilient means and moving the slide to a release position which is preferably stable.

Each single-pole switch module may also, in known manner, have a single slidable coupling slide and a fixed coupling tooth opposite the slide, instead of two slides for coupling on the rail.

When multipole switch blocks are formed, it is not necessary for all of the various single-pole modules to have coupling slides; reasons of economy suggest the use of the strictly essential number of slides.

As already stated, in the case of two-pole switch blocks, it suffices for a single module to have slides (or a slide). In the case of three-pole or four-pole blocks, it suffices for the end modules of the block to have slides.

Advantage is taken of this characteristic, as explained below to ensure improved irreversible coupling between the switch block and the differential module.

To conclude the description of Figure 1, it should be noted that the upper and lower faces of the housings of each switch 1 or 2 have, in known manner, holes 29, 30 (only the holes in the upper face are visible in Figure 2) for access to clamping terminals clamped by screws accessible through holes 31, 32, 33, 34 in the front of the housing.

Moreover, as described in EP-A-0 626 711, the upper and lower faces of the housings have slots 35, 36 (only those on the upper surface are visible) which extend into the housings and house closure tongues which close the holes 31, 32, 33, 34 and prevent access to the clamping screws of the terminals.

With reference now to Figure 2, this is an exploded, perspective view showing a two-pole differential protection module 37 with safety coupling for coupling to a modular switch block 38, according to the present invention.

The differential module 37 which is of a shape substantially similar to that of the switch modules 39, 40 which form the switch block 38 has, on its rear face, at least one slide 42 for coupling with a rail and a fixed opposing tooth 3 opposite the slide 42, with or without a coupling recess.

On the front face there is a mechanical setting lever 43, a test button 44 and holes 45, 46 (the number of holes being equal to the number of poles of the protection module) for access to clamping screws of a corresponding number of electrical connection terminals, not visible, in which the electrical cable ends for connection to the mains supply (or to the system to be protected), which are inserted in the terminals through two inlet holes 47, 48 in the lower face (with exclusive reference to the conventions adopted) of the protection module, are clamped.

Two output cable ends 50, 51 for connection to the switch block 38 emerge from the lower face 49 near the rear face and are partially protected by a grill 52 forming a protective duct which, advantageously, is perforated to permit cooling of the cable ends by the circulation of air.

The output cable ends 50, 51 which are of the insulated single-core type, are advantageously preformed to permit easy insertion in the connection terminals of the switch block 38 which are accessible through holes 53, 54 in the housings of the switch modules 39, 40, respectively.

When a differential module 37 and the switch block 38 are juxtaposed with their respective side faces 55, 56 in contact, the kinematic mechanisms for actuating the two units are interconnected in known manner by means of a pin 4 which projects from a slot 5 in the wall 56 and is inserted in a corresponding slot 6 in the wall 55, ensuring that the switches in the block 38 are opened by the operation of the differential protection module.

The relative positioning of the juxtaposed devices is ensured by register pins 7, 8 formed on the side face 56 of the differential module and by corresponding seats 9, 10 formed in the side face 55 of the switch block 38.

Advantageously, according to the invention, the pins 7, 8 and the seats 9, 10 operate as a key to permit coupling exclusively between differential modules and switch blocks with compatible electrical characteristics and capacities, for example up to 32A and from 32A up to 60A, respectively, and in addition, to permit coupling between differential modules with predetermined numbers of poles and switch blocks with the same number of poles.

The key function can be achieved extremely cheaply by spacing the pins 7, 8 by a distance selected from three different distances specific to the number of poles of the protection module which, essentially, can only be two, three or four.

The spacing of the pins 7, 8 from an arbitrary reference of the housing, for example, the rear face, may be selected from two different distances corresponding to two maximum current capacities of the differential module, respectively.

In practice, the face 56 is produced by the moulding of a half-shell of the housing and the die may have an insert which can be oriented rotatably in the die and has a recess for forming one of the pins in an eccentric position.

By assigning to the insert one of six angular positions relative to the die, six possible distinct spatial combinations of pins 7, 8 can be achieved with one pin in a fixed position relative to the housing.

Alternatively, both of the pins may be produced by the selective orientation of orientable inserts in the die.

The seats 9, 10 in the switch block 38 can be produced by a milling operation carried out automatically during the assembly of the blocks, according to their number of poles and their capacity characteristics and, if need be, only on two-pole and four-pole blocks.

The pins 7, 8 and the corresponding seats 9, 10 ensure the precise relative positioning of the juxtaposed differential module and switch block.

They also exclude any possibility of the juxtaposition of components which are not compatible as regards the number of poles and capacity characteristics.

They cannot, however, keep the two juxtaposed components in mutual contact.

For this purpose, anchoring teeth may be provided between devices, as described in European patent application No. 94201433.3, but their presence is rendered wholly superfluous and ancillary by the irreversible safety coupling which will now be described.

Coupling between the devices 37 and 38 is ensured by a protective cover 60 having a tongue 61 extending perpendicular to the cover 60 on one side thereof.

The tongue 61 with a forked end and having two engagement teeth 62, 63, at its end, is inserted by the resilient deformation of its ends in a slot 64 with opposed parallel faces which opens in the lower face of the module 37 and extends parallel to the side face 56.

The slot 64 has, at its ends, two check shoulders which engage the teeth 62, 63 and prevent the tongue 61 from coming out of the slot.

The tongue 61 can therefore slide freely inside the slot with a travel defined by the length of the tongue, in two opposed directions perpendicular to the lower face 49 of the differential module 37 between a fully-inserted position and a position in which it is pulled out as far as possible, which is limited by the interference of the teeth 62, 63 with the locking shoulders.

The slot 64 opens in the face 49 in a dihedron which advantageously allows the tongue to be pivoted about a pivot axis defined by the positions of the teeth 62, 63 when the tongue is in the outermost position.

Figure 3 is an enlarged, perspective view, showing a portion of the module 37 and the cover 60 in the open position, with the tongue 61 in the outermost position and pivoted farthest from the sliding plane.

Clearly, in this position, the cover affords easy access to the cable ends 50, 51 for their insertion in the clamping terminals of the switch block 38 through the holes 53, 54 (Figure 2).

As shown in Figure 3, the cover 60 is constituted by a half-shell formed by a rectangular cover plate 65 and a frame formed by four sides 66, 67, 68, 69 perpendicular to the cover plate 65, the sides 66, 68 extending parallel to the tongue 61 and the sides 67, 69 extending perpendicularly.

The tongue 61 projects as an extension of the side 66 which has a suitable undercut for preventing the side from interfering with the cable ends 50, 51 extending from the duct 52 of the differential actuator 37 when the cover is in the closed position.

The side 67 has two projecting extensions 70, 71 which extend in the same direction as the tongue 61 and in which two tongues 72, 73 are formed, fixed to and projecting from the free ends of the extensions 70, 71.

The tongues 72, 73 are advantageously inclined to the extensions 70, 71 so as to form teeth at their free ends for irreversible coupling fitted in suitable seats 77, 78 in the switch block (Figure 2).

These aspects are described fully in European patent application No. 94201432.5 already mentioned.

According to the innovative aspect of the present invention, the side 69 at the opposite end of the cover plate 65 to the side 67 has an engagement comb extending perpendicular to the cover plate 65 and preferably formed as a fork 57 with two arms each terminating in a coupling tooth 74, 75, respectively.

A portion 58 of the side 69 is conveniently undercut and separated from the rest of the side by two parallel slots 93, 94 extending into the cover plate 65 to form a fairly resilient tongue 95 projecting from the plate 65 and terminating in a coupling tooth 76.

The interactions of the cover 60 with the switch block 38 will now be considered with reference to Figures 2 and 3 together.

With the cover 60 open, the two devices 37 and 38 are juxtaposed by the installer.

The register and key pins ensure the compatibility of the two devices and prevent any incorrect juxtaposition.

The cable ends 50 and 51 are inserted in the holes 53 and 54 opening in the lower face 149 of the block 38 and clamped in the respective connection terminals.

The clamping takes place by the screwing of the clamping screws through the holes 33 and 34 in the switch housings.

These operations can be carried out either with the devices fitted side by side on the rail or before fitting on the rail.

Once the electrical connections between the devices have been made, the cover 60 is brought close to the lower face 149 of the switch block 38 and pushed into the irreversible closure and mechanical locking position.

By this operation, the projecting extensions 70, 71 and the tongues 72, 73 are inserted irreversibly, as a result of the seal ensured by the tongues 72, 73, in corresponding slots 78, 77 in the housings of the switches 39, 40.

The tongues 72, 73 thus inserted prevent any further access to the clamping screws of the terminals through the holes 33, 34. Any attempt to release the connections, for which it is necessary to break into the coupling device, is thus prevented.

At the same time, the fork 57 is inserted in the slide socket 41 of the switch 40, this socket being without a slide, and the teeth 74, 75 are engaged irreversibly in corresponding seats of the slide socket, providing an additional irreversible mechanical connection between the switch unit 39, 40 and the cover 60 so that the cover is firmly anchored on two opposite sides.

The presence of a coupling slide with a head extending out of the socket of the switch 39 does not give rise to interference with the cover 60, owing to the presence of the undercuts in the side portion 58, but allows the tooth 76 on the end of the resilient tongue 95 to snap-engage irreversibly in the operating recess 98 of the coupling slide 96 forming a further irreversible connection with the switch block.

These additional irreversible connections are achieved without the need to modify or specialize the switch blocks in any way, simply with the use of the elements provided therein for other functions, particularly the slide for coupling with the rail, and the respective sockets provided in each switch module which, in the case of two-pole blocks, have slides in only one module and, in the case of multipole blocks with more than two poles have coupling slides only in the end modules.

Figure 4 is a section taken on the line I-I of Figure 2 showing a slide socket 41 formed by a switch housing and its interaction mutually exclusively with a slide 80 or with the fork 57 of the cover 60.

The prismatic slide socket 41 has, in two opposite faces, two recesses 81, 82 in which two holding teeth 83, 84 of the slide are force-fitted by resilient deformation of the slide 80.

In the absence of the slide, the recesses 81, 82 constitute a seat for the irreversible engagement of the teeth 74, 75 of the fork 57 which is force-fitted in the housing through the facing end opening in the lower wall until the teeth 74, 75 snap-engage in the recesses 81, 82.

The interaction between teeth such as the tooth 76 and slide heads such as 96 is just the same.

The irreversible nature of the coupling between the electrical devices ensured by the coupling device described should not exclude the possibility of the release of the devices from an installation rail in order to replace them.

If the various modules which form the devices have opposed pairs of slides, as shown in Figure 1, this is in any case possible, since the protective and coupling cover prevents access to the slide heads projecting from only one face of each module.

It is thus possible to act on the heads of the slides which project beyond the unprotected face in order to release the rail, which operation nevertheless involves some difficulty since it requires some rotation and translation of the modules, whereas the possibility of operating both of the slides of the modules simplifies the operation enormously and permits detachment from the rail simply by translation perpendicular to the plane of the rail.

In the case of modules having fixed coupling teeth opposite movable coupling slides, however, it is necessary to ensure that the slide can be operated even if it is masked by the protective cover.

For this purpose, as shown in Figure 2, the resilient tongue 95 formed in the cover 60 has, in addition to the coupling tooth 76, an external stirrup 97 which enables a bending moment to be exerted on the arm 95 (for example by the insertion of the end of a screwdriver in the stirrup) with a consequent outward translation of the end of the tongue and of the tooth 76 relative to the cover 60.

The translation of the tooth 76 engaged with the head of the slide withdraws the slide outwardly to a release position which is preferably stable. These aspects are shown more clearly by Figures 5 and 6.

Figure 5 shows, in section in a plane parallel to the side faces, a portion of the switch 39 of Figure 2 and the cover 60 coupled irreversibly to the switch 39 by means of the tongue 73 snap-engaged in the slot 77.

The tongue 73 closes the access 33 to the clamping screw of the terminal and prevents tampering with the connections.

On the opposite edge of the cover 60, the tooth 76 is supported by the resilient arm 95 and is snap-engaged in a seat in the slide head 96.

The cover 60 is therefore anchored irreversibly to the switch block, protecting the connecting cable ends between the switch block and the differential module.

To allow the slide for coupling with the rail to be moved to a release position when the head 96 of the slide is protected by the cover 60, the resilient arm 95 has a blind stirrup 97, equivalent to an externally-accessible tooth, which enables an outward withdrawal force to be exerted on the arm 95 and this withdrawal effect to be transferred, by means of the tooth 76, to the slide for coupling with the rail.

Figure 6 is a schematic side view showing how, by acting from the front of the switch block, the end of a screwdriver 105 can be inserted in the stirrup 97 of the arm 95, applying thereto a suitable bending moment about a fulcrum formed by the contact of the screwdriver 105 with a bend 99 in the arm 95. The bending moment brings the arm 95 to the position shown and the tooth 76 is translated in the direction indicated by the arrow 106, entraining the coupling slide with it.

## Claims

1. An apparatus comprising a differential protection module (37) with a multipole switch block (38) with safety coupling for coupling the differential protection module (37) to the multipole switch block (38), the differential protection module (37) and the multipole switch block (38) being intended to be juxtaposed with first side faces (55, 56) in contact and interconnected electrically by cable ends (50, 51) integral with the differential module (38) emerging from a second face of the differential module (38) and extending into a second face of the switch block (37), the switch block (37) being formed by a plurality of juxtaposed single-pole switch modules (39, 40), each having a socket for a slide (96) for coupling with a rail, the socket opening in the second face, at least a first of the single-pole modules (39, 40) having a slide (96) housed in the socket, at least a second of the modules (39,40) being without a slide (96) in the socket, and the apparatus comprising:
- a protective cover (60) for the second face of the switch block and the cable ends (50, 51), the cover (60) having at least first means (70, 71, 72, 73) for irreversible coupling with the switch block (38) which, once they are coupled with the switch block (38), prevent access to clamping screws and terminals in the switch block (38) for connection to the cable ends (50, 51), and at least one second captive coupling means (61) articulated in the differential module (37), the apparatus being characterized in that
the differential module (37) comprises at least one pair of register pins (7, 8) projecting from the face (56) and arranged in a variable manner relative to one another to form a key for the exclusive coupling of a differential module (37) and a switch block (38) which have predetermined electrical characteristics and the same number of poles, and in that the protective cover (60) comprises at least one third coupling means (57, 74, 75) for irreversible engagement in the slide socket which is without a slide (96).

2. An apparatus according to Claim 1, in which the third coupling means comprises a resilient fork (57) terminating in two opposed engagement teeth (74, 75) for irreversible engagement in check recesses (81, 82) in the slide socket.

3. An apparatus according to Claim 1 or Claim 2, in which the protective cover (60) comprises at least one fourth means (58, 76) for irreversible coupling with the slide (96).

4. An apparatus according to Claim 3 in which the slide has a head (96) having a recess (98) accessible from the second face, and in which the fourth irreversible coupling means (58, 76) comprises a resilient arm formed in the cover (60) and terminating in a tooth (76) for irreversible snap-engagement in the recess (98).

5. An apparatus according to Claim 4, in which the resilient arm has means for applying to the resilient arm a bending moment withdrawing the coupling slide (96) to a release position.

6. An apparatus according to Claim 5, in which the means consist of a blind stirrup formed in the arm.

## Patentansprüche

1. Ein Differeintialschutzmodul (37) mit einem mehrpoligen Schalterblock (38) mit einer Sicherheitskopplung zum Koppeln des Differeintialschutzmoduls (37) mit dem mehrpoligen Schalterblock (38), wobei das Differentialschutzmodul (37) und der mehrpolige Schalterblock (38) dafür vorgesehen sind, um mit ersten Seitenflächen (55, 56) in Kontakt nebeneinander angeordnet zu werden und um mittels Kabelenden (50, 51), die eine Einheit bildend mit dem Differentialmodul (37) gebildet sind, die aus einer zweiten Seite des Differentialmoduls (37) herausragen und die sich in eine zweite Seite des Schalterblocks (38) erstrecken, miteinander elektrisch verbunden zu werden, wobei der Schalterblock (38) durch eine Mehrzahl von nebeneinanderliegenden einpoligen Schaltermodulen (39, 40) gebildet ist, von denen jedes einen Sockel für ein Gleitstück (96) zum Koppeln mit einer Schiene aufweist, wobei sich der Sockel in der zweiten Seite öffnet, wobei zumindest ein erstes der einpoligen Module (39, 40) ein Gleitstück (96) aufweist, das in dem Sockel untergebracht ist, wobei zumindest ein zweites der Module (39, 40) kein Gleitstück (96) in dem Sockel aufweist, und wobei die Vorrichtung folgende Merkmale aufweist:
- eine Schutzabdeckung (60) für die zweite Seite des Schalterblocks und die Kabelenden (50, 51), wobei die Abdeckung (60) zumindest eine erste Einrichtung (70, 71, 72, 73) zum irreversiblen Koppeln mit dem Schalterblock (38), die, sobald dieselbe mit dem Schalterblock (38) gekoppelt ist, einen Zugang zu den Klemmschrauben und Anschlüssen in dem Schalterblock (38) für eine Verbindung mit den Kabelenden (50, 51) verhindert, und zumindest eine zweite Halte-Kopplungseinrichtung (61) aufweist, die in dem Differentialmodul (37) gelenkig angeordnet ist, wobei die Vorrichtung dadurch gekennzeichnet ist, daß
das Differentialmodul (37) zumindest ein Paar von Ausrichtungsstiften (7, 8), die von der Seite (56) vorstehen und auf eine veränderbare Art und Weise zueinander angeordnet sind, um einen Schlüssel für das ausschließliche Koppeln eines Differentialmoduls (37) und eines Schalterblocks (38) zu bilden, die vorbestimmte elektrische Charakteristika und dieselbe Anzahl von Polen aufweisen, und daß die Schutzabdeckung (60) zumindest eine dritte Kopplungseinrichtung (57, 74, 75) zur irreversiblen Ineingriffnahme in dem Gleitsockel aufweist, der kein Gleitstück (96) aufweist.

2. Eine Vorrichtung gemäß Anspruch 1, bei der die dritte Kopplungseinrichtung eine elastische Gabel (57) aufweist, die in zwei gegenüberliegenden Ineingriffnahmezähnen (74, 75) zum irreversiblen Ineingriffnehmen in Gegenausnehmungen (81, 82) in dem Gleitsockel endet.

3. Eine Vorrichtung gemäß Anspruch 1 oder 2, bei der die Schutzabdeckung (60) zumindest eine vierte Einrichtung (58, 76) zum irreversiblen Koppeln mit dem Gleitstück (96) aufweist.

4. Eine Vorrichtung gemäß Anspruch 3, bei der das Gleitstück einen Kopf (96) mit einer Ausnehmung (98) aufweist, die von der zweiten Seite zugänglich ist, und bei der die vierte Einrichtung (58, 76) zum irreversiblen Koppeln einen elastischen Arm aufweist, der in der Abdeckung (60) gebildet ist und in einem Zahn (76) für eine irreversible Schnapp-Ineingriffnahme in der Ausnehmung (98) endet.

5. Eine Vorrichtung gemäß Anspruch 4, bei der der elastische Arm eine Einrichtung aufweist, um an den elastischen Arm ein Biegemoment anzulegen, das das Kupplungsgleitstück (96) zu einer Löseposition zurückzieht.

6. Eine Vorrichtung gemäß Anspruch 5, bei der die Einrichtung aus einem Blindbügel besteht, der in dem Arm gebildet ist.

## Revendications

1. Dispositif comprenant un module de protection différentielle (37) muni d'un bloc d'interrupteur multipolaire (38) à accouplement de sécurité pour un couplage du module de protection différentielle (37) avec le bloc d'interrupteur multipolaire (38), le module de protection différentielle (37) et le bloc d'interrupteur multipolaire (38) étant prévus pour être juxtaposés avec des premières faces latérales (55, 56) en contact et pour être raccordés, de façon électrique, par des terminaisons de câble (50, 51) intégrées au module différentiel (38) sortant d'une seconde face du module différentiel (38) et s'étendant dans une seconde face du bloc d'interrupteur (37), le bloc d'interrupteur (37) étant composé d'une pluralité de modules d'interrupteur unipolaire juxtaposés (39, 40), possédant chacun une partie d'emboîtement pour le couplage d'un coulisseau (96) avec un rail, la partie d'emboîtement débouchant dans la seconde face, au moins un premier des modules unipolaires (39, 40) possédant un coulisseau (96) logé dans la partie d'emboîtement, au moins un second des modules (39, 40) ne possédant pas de coulisseau (96) dans la partie d'emboîtement et le dispositif comprenant :
- un couvercle de protection (60) pour la seconde face du bloc d'interrupteur et les terminaisons de câble (50, 51), le couvercle (60) possédant au moins des premiers moyens (70, 71, 72, 73) pour un couplage irréversible avec le bloc d'interrupteur (38) qui, une fois couplés au bloc d'interrupteur (38), empêchent un accès à des vis de serrage et à des bornes dans le bloc d'interrupteur (38) pour une connexion avec les terminaisons de câble (50, 51), et au moins un second moyen de couplage imperdable (61) articulé dans le module différentiel (37), le dispositif étant caractérisé en ce que le module différentiel (37) comprend au moins une paire de doigts d'alignement (7, 8) se projetant à partir de la face (56) et agencés de façon variable l'un par rapport à l'autre afin de former un verrouillage pour le couplage exclusif d'un module différentiel (37) et d'un bloc d'interrupteur (38) possédant des caractéristiques électriques prédéterminées et le même nombre de pôles, et en ce que le couvercle de protection (60) comprend au moins un troisième moyen de couplage (57, 74, 75) pour un engagement irréversible dans la partie d'emboîtement de coulisseau ne présentant pas de coulisseau (96).

2. Dispositif selon la revendication 1, dans lequel le troisième moyen de couplage comprend une fourchette élastique (57) se terminant par deux dents opposées d'engagement (74, 75) pour un engagement irréversible dans des creux de contrôle (81, 82) de la partie d'emboîtement de coulisseau.

3. Dispositif selon la revendication 1 ou 2, dans lequel le couvercle de protection (60) comprend au moins un quatrième moyen (58, 76) pour un couplage irréversible avec le coulisseau (96).

4. Dispositif selon la revendication 3, dans lequel le coulisseau possède une tête (96) possédant un creux (98) accessible à partir de la seconde face, et dans lequel le quatrième moyen de couplage irréversible (58, 76) comprend un bras élastique formé dans le couvercle (60) et se terminant par une dent (76) pour un encliquetage irréversible dans le creux (98).

5. Dispositif selon la revendication 4, dans lequel le bras élastique possède un moyen pour appliquer au bras élastique un moment de flexion retirant le coulisseau de couplage (96) sur une position de libération.

6. Dispositif selon la revendication 5, dans lequel le moyen est constitué d'un étrier aveugle formé dans le bras.
